# EUROPEAN PATENT SPECIFICATION

(11) **EP 4 433 747 B1**
(45) Date of publication and mention of the grant of the patent: **19.08.2026**
(21) Application number: 22895024.2
(22) Date of filing: 21.11.2022
(51) Int. Cl.: F24C 7/00, F21S 10/04, B05B 12/10, B05B 17/06, B05B 7/00, F21Y 103/10, F21W 121/00, F21Y 113/10, F21Y 115/10

(54) **FIRE SIMULATING DEVICE PROVIDING AN OPTICAL EFFECT BY ILLUMINATING MIST**
VORRICHTUNG ZUR SIMULATION EINES FEUERS MIT EINEM OPTISCHEN EFFEKT DURCH NEBELBELEUCHTUNG
DISPOSITIF DE SIMULATION D'FEU FOURNISSANT UN EFFET OPTIQUE PAR ÉCLAIRAGE DE BRUME

(30) Priority: 21.11.2021 DK PA202101097
(43) Date of publication of application: 25.09.2024
(73) Proprietor: Decoflame ApS, 9380 Vestbjerg (DK)
(72) Inventor: THOMSEN, Kjell, 9400 Nørresundby (DK)
(74) Representative: Andreasen, Søren Laursen Vasegaard
(86) International application number: PCT/DK2022/050243
(87) International publication number: WO 2023/088528

(56) References cited:
- EP-A1- 3 745 029
- EP-A2- 3 267 112
- CN-U- 204 437 981
- CN-U- 210 320 532
- CN-U- 210 373 693
- CN-U- 210 861 306
- JP-B2- 2 916 109
- US-A1- 2017 307 223
- US-A1- 2019 353 316
- US-A1- 2019 353 316

## Description

### Field of invention

The present invention relates to a fire simulating device for providing an optical effect that simulates flames by illuminating mist generated from water. The device is preferably also configured to stimulate smoke.

### Prior art

Fire simulating devices for providing an optical effect that simulates flames by illuminating mist generated from water are known. A typical prior art fire simulating device comprises a water tank and an ultrasonic transducer arranged to transmit ultrasound through the water in the water tank and hereby provide mist (clouds of water vapour). A fan is typically arranged to create pressure gradient that draws the mist upwards through an outlet structure, through which the mist leaves the fire simulating device. The mist is intended to simulate smoke. By illuminating the mist from below by a light source, it is possible to simulate flames. By varying the intensity of the light one can simulate the glowing nature of a fireplace.

WO03063664A1 discloses a simulated fire comprising a plurality of fuel pieces supported by a lattice work support. A water container comprising an ultrasonic transducer is arranged below the fuel pieces. The ultrasonic transducer is arranged and configured to generate clouds of water vapour (a mist). The simulated fire comprises a fan arranged and configured to draw the mist through gaps between the fuel pieces. The simulated fire comprises a heater arranged to heat the mist. The mist emerging through the fuel bed resembles smoke. The mist is heated by the fan heater. The fuel bed is illuminated from below by a light source.

US 2017/0307223 A1 discloses an electric fireplace device for simulating flame and smoke effects without real combustion. The device comprises a mist generator configured to convert water from a removable water container into mist, for example using ultrasonic vibration. The mist is guided toward a hearth area supporting artificial logs. One or more light sources, including LED modules, are arranged to illuminate the mist in order to create a visual flame effect. An electric fan may be provided to direct airflow and transport the mist. The device may further include a water level detector for monitoring the water supply and controlling operation of the mist generator.

EP 3267112 A2 discloses a hearth-fire simulating apparatus configured to generate a visual flame and smoke effect using mist and light. The apparatus comprises a container holding water, an ultrasonic transducer for generating mist, and a mist distributing chamber arranged above the container. Airflow drive means, such as a ventilator or heat source, are provided to entrain and transport the mist toward a fire-bed simulation cover having openings. Light sources are arranged to illuminate the mist emitted through the openings to simulate flames. The apparatus may further include a storage tank for replenishing water and a heating element to promote upward airflow and mist movement.

JP 2916109 B2 discloses a spray-type cosmetic apparatus for emitting a mixed mist toward a user's face or hair. The apparatus comprises a steam generator and a mist generator, each supplied with water, and a mixer in which steam and mist are combined. The mist generator includes an ultrasonic transducer for generating mist, while the steam generator includes a heating element for producing steam. The mixed mist is discharged through a spray nozzle connected to the mixer. The document further describes structural arrangements intended to prevent reverse flow of steam or condensate into the mist generator or steam generator, thereby protecting components such as ultrasonic transducers and plastic tanks from thermal damage.

US 2019/0353316 A1 discloses a flames and smoke simulating device for decorative applications. The device comprises an ultrasonic mist generator arranged in a mist chamber, one or more fans for directing air flow, and a light source for illuminating the mist to simulate flames or smoke. The mist chamber and an air chamber are fluidly linked to a common outlet, such that mist-air and air streams converge and rise above the outlet. The device may further comprise a fluid tank, pumps, and fluid level sensors for supplying water to the mist generator, as well as a control unit for controlling light and airflow parameters.

When using a fire simulating device, it is desirable to be able to regulate and hereby control the flames. It is, however, difficult to control the size of the flames because the mist production and the travel characteristics of the uprising mist depends on several condition parameters. Accordingly, it would be desirable to be able to provide a fire simulating device that enables control of the flame size.

Thus, there is a need for a fire simulating device that enables control of the flame size. Accordingly, it is an object of the invention to provide a fire simulating device that enables the user to control of the flame size.

### Summary of the invention

The object of the present invention can be achieved by a fire simulating device as defined in claim 1. Preferred embodiments are defined in the dependent subclaims, explained in the following description and illustrated in the accompanying drawings.

The fire simulating device according to the invention is a fire simulating device for providing an optical effect that simulates flames by illuminating mist generated from water, wherein the device comprises:
- a mist chamber configured to contain water;
- one or more atomizers arranged to transmit ultrasound through the water in the mist chamber and hereby generate mist;
- one or more light sources arranged to direct their light against the mist and hereby simulate flames;
- a top plate containing an opening through which an outlet portion extends, wherein the outlet portion is configured to guide away mist from the mist chamber, wherein the outlet portion comprises an elongated opening in its distal end;
- a blower arranged and configured to provide an air flow into the mist chamber;
- a heating element arranged to heat the mist, wherein the fire simulating device comprises a water tank, wherein the tank is in fluid communication with the mist chamber, wherein the mist chamber comprises a water level sensor arranged and configured to detect the water level of the mist chamber, wherein the fire simulating device comprises a temperature sensor arranged and configured to communicate with a control unit and to measure the temperature of the heating element or the mist, wherein the fire simulating device is configured to control transport of water from the water tank to the mist chamber by using a controllable valve or a pump,
wherein the fire simulating device further comprises:
- a first light assembly comprising a plurality of light sources arranged at one side of the distal end of the outlet portion and
- a second light assembly comprising a plurality of light sources arranged at other side of the distal end of the outlet portion, wherein each light assembly comprises a plurality of separation structures extending upwards, wherein each separation structure separates two adjacent light sources.

Hereby, it is possible to provide a fire simulating device that enables the user to control the flame size. As the flame size depends on the temperature of the mist, using a temperature sensor to measure the temperature of the heating element or the mist will make it possible to control the flame size.

The fire simulating device is configured to resemble flames. This is done by providing an optical effect that simulates flames by illuminating mist generated from water.

The fire simulating device comprises a mist chamber configured to contain water. This allows generation of mist in the mist chamber.

The fire simulating device comprises one or more atomizers arranged to transmit ultrasound through the water in the mist chamber and hereby generate mist. Each atomizer comprises an ultrasonic transducer arranged and configured to emit ultrasound into the water in the mist chamber. Accordingly, each of the one or more atomizers is configured to create cavitation in the water of the mist chamber. The cavitation generates mist. In one embodiment, the ultrasonic transducer is configured to convert current into ultrasound.

In one embodiment, the ultrasonic transducer is configured to convert an alternating current into ultrasound.

In one embodiment, the ultrasonic transducer is configured to convert a direct current into ultrasound.

The fire simulating device comprises one or more light sources arranged to illuminate the mist and hereby simulate flames. Hereby, the light sources can create an optical effect that gives the mist a desired colour depending on the colour of the light emitted by the light sources.

The fire simulating device comprises a top plate provided with an opening. The top plate provides a finish and may function as a lid of the fire simulating device. Some of the light generated by the light sources passes through the opening and will eventually reach the mist.

The control unit is preferably an integrated part of the fire simulating device, wherein the control unit is configured to control various functions of the fire simulating device. In a preferred embodiment, the fire simulating device comprises a control unit (also referred to as a control unit) that is electrically connected to the temperature sensor. Hereby, the control unit receives the data collected by the temperature sensor. Accordingly, the control unit can apply the detected temperature to regulate the density of the mist that is produced in the mist chamber.

In one embodiment, the fire simulating device comprises an outlet portion extending through the opening of the top plat.

The outlet portion is configured to guide away mist from the mist chamber, wherein the outlet portion comprises an elongated opening in its distal end. The outlet portion function as a chimney. In a preferred embodiment, the proximal portion of the outlet portion is tapered so that the cross-sectional area (in a horizontal plane when the fire simulating device is in use), the proximal portion of the outlet portion tapers towards the distal end of the outlet portion.

The mist chamber is in fluid communication with the outlet portion so that mist leaving the mist chamber is guided away through the outlet portion. In one embodiment, the outlet portion is attached to the mist chamber.

The top plate is provided with an opening. Hereby, the mist can be released through the opening in the top plate.

The fire simulating device comprises a blower arranged and configured provide an air flow into the mist chamber. Hereby, mist escaping from the mist chamber can be replaced by inlet air blown into the mist chamber by means og the blower. Hereby, the pressure inside the mist chamber can be regulated. It is possible to keep the pressure inside the mist chamber within a predefined pressure range.

The fire simulating device comprises a heating element arranged to heat the mist. In one embodiment, the heating element is an electric heating element (being electrically powered).

The fire simulating device comprises a temperature sensor arranged to communicate with a control unit and configured to measure the temperature of the heating element or the mist.

In one embodiment, the fire simulating device comprises a temperature sensor arranged and configured to measure the temperature of the heating element.

In one embodiment, the fire simulating device comprises a temperature sensor arranged and configured to measure the temperature of the mist having passed the heating element.

In one embodiment, the fire simulating device is configured to provide an optical effect that simulates flames and smoke. This can be accomplished by illuminating only some of the mist while the remaining portion of the mist is left unilluminated. The unilluminated mist will reassemble smoke.

In one embodiment, the heating element is arranged in the outlet portion.

In one embodiment the temperature sensor is arranged above the heating element.

In one embodiment, the temperature sensor is thermally connected to the heating element. Hereby, the temperature sensor can detect the temperature of the heating element.

In one embodiment, the temperature sensor is arranged in a distance less than 10 cm from the distal end of the outlet portion above the heating element.

In one embodiment, the temperature sensor is arranged in a distance less than 5 cm from the distal end of the outlet portion above the heating element.

In one embodiment, the blower is arranged and configured to create pressure gradient that draws the mist upwards through an outlet portion through which the mist leaves the fire simulating device.

In one embodiment, the fire simulating device comprises a control unit that is electrically or communicatively connected to the light sources, wherein the control unit is configured to vary the intensity of the light emitted by the light sources. Accordingly, the control unit makes it possible to simulate the glowing nature of a fireplace.

In one embodiment, the heating element is arranged in a distance in the range 3-15 cm from the distal opening of the outlet portion.

In one embodiment, the heating element is arranged in a distance in the range 5-10 cm from the distal opening of the outlet portion.

In one embodiment, the fire simulating device comprises:
- one or more light sources are arranged at one side of the distal end of the outlet portion and/or
- one or more light sources are arranged at the other side of the distal end of the outlet portion.

The fire simulating device comprises:
- a first light assembly comprising a plurality of light sources arranged at one side of the distal end of the outlet portion and
- a second light assembly comprising a plurality of light sources arranged at other side of the distal end of the outlet portion, wherein each light assembly comprises a plurality of separation structures extending upwards, wherein each separation structure separates two adjacent light sources.

Hereby, it is possible to illuminate the mist from two sides. Furthermore, the separation structures function as a shield that prevents light emitted from light sources from illuminating reaching persons in proximity to the fire simulating device. The separation structures may have any size and geometry allowing the separation structures to shield and hereby prevent light emitted from light sources from illuminating reaching persons in proximity to the fire simulating device
In one embodiment, the separation structures are formed as plates.

In one embodiment, each light source comprises a light-emitting diode (LED).

In one embodiment, the separation structures are formed as plates that extend upwards.

In one embodiment, the light sources are covered by a filter configured to only allow light of a predefined range of wave lengths to pass. Hereby, it is possible to filter the light emitted by the light sources and thus illuminate the mist by light having a predefined range of colours.

On one embodiment, the filter is formed as a foil that cover the light sources.

In one embodiment, the light sources are designed to illuminate the mist with light having a predefined desirable colour(s) without using any foil. In this embodiment, the light sources emit light having the predefined desirable colour(s).

In one embodiment, the fire simulating device comprises:
- a first group of light sources are mounted in a first mounting member arranged at one side of the outlet portion and
- a second group of light sources are mounted in a second mounting member arranged at the other side of the outlet portion.

In one embodiment, the mounting members are shaped as elongated members having a basically U-shaped cross-section.

In one embodiment, a first filter covers the opening of the first mounting member.

In one embodiment, a second filter covers the opening of the second mounting member. The filters may be made of a coloured foil.

In one embodiment, the filters are preferably may of several layers of coloured foil.

In one embodiment, the first mounting member and/or the second mounting member are mounted on a support structure that is thermically connected to the top plate.

Hereby, the support structures are capable of transferring heat from the light sources to the top plate. Since the top plate is heated by the heat from the light sources, condensation of mist on the top plate can be avoided.

In one embodiment, the fire simulating device comprises two support structures arranged at each side of the outlet portion.

In one embodiment, the bottom portion of each of the mounting members is attached and hereby thermally connected to a corresponding support structure. Accordingly, heat generated by the light sources will be transferred to the corresponding support structure via the corresponding mounting member.

In one embodiment, at least one of the mounting members comprises an adjustment structure by which it is possible to adjust the orientation of the mounting member. Hereby, the orientation of the light emitted by the light sources can be adjusted.

In one embodiment, at least one of the mounting members comprises an adjustment structure by which it is possible to adjust the position of the mounting member.

In one embodiment, the adjustment structure comprises a mounting part and one or more attachment structures (e.g. screws) arranged and configured to fix the adjustment structure to the mounting part.

In one embodiment, the adjustment structure is moveably arranged relative to the mounting part.

In one embodiment, the adjustment structure is slidably arranged relative to the mounting part.

The fire simulating device comprises a water tank, wherein the tank is in fluid communication with the mist chamber. Hereby, it is possible to use the water tank as a reservoir and supply the mist chamber with water from the water tank.

In one embodiment, the transport of water from the water tank to the mist chamber is control by using a controllable valve. If the water level in the water tank is higher than the water level in the mist chamber no pump is needed since the transport can be accomplished by using gravity.

In one embodiment, the transport of water from the water tank to the mist chamber is controlled by using an electrical pump.

In one embodiment which is not part of the invention, the fire simulating device comprises no water tank except for the mist chamber. In this embodiment, water can be delivered directly to the mist chamber through a pipe or hose that can be connected to a water distribution pipes (e.g. of a building). Hereby, it is possible to reduce the size of the fire simulating device.

The mist chamber comprises a water level sensor arranged and configured to detect the water level of the mist chamber. Hereby, it is possible to adjust the water level in order to maintain the water level in a predefined preferred range.

In one embodiment, the water level sensor is a float switch.

In one embodiment, the water level sensor is an ultrasonic sensor. In one embodiment, the ultrasonic sensor applies high frequency ultrasonic waves to detect the levels of water. This sensor may preferably be mounted at the top of a mist chamber and be aimed downward. The ultrasonic sensor may preferably be configured to transmit waves and measures the time it takes to receive the return signal back from the water to the sensor.

In one embodiment, the water level sensor is a pressure sensor mounted at the bottom of the mist chamber. Hereby, the pressure can calculate the water level on the basis of the detected pressure values.

In one embodiment, the fire simulating device comprises a control unit and a valve, wherein the control unit is communicatively connected to the valve and to the water level sensor, wherein the control unit is configured to control the activity of the valve on the basis of data from the water level sensor.

In one embodiment, the mist chamber comprises an air chamber arranged and configured to receive intake air blown into the mist chamber by means of the blower, wherein the air chamber is arranged and shaped to guide the intake air downwards towards the water in the mist chamber. Hereby, a more even distribution of air towards the water in the mist chamber can be achieved. Moreover, unintended turbulence cause by the flow of the blower can be avoided. Accordingly, a more uniform flow of mist out of the mist chamber is achieved.

In one embodiment, the tank comprises a receiving portion surrounded by the tank and the mist chamber is designed to be received by the receiving portion.

In an embodiment, the fire simulating device comprises a silencer that is arranged in the mist chamber, wherein the silencer is arranged and configured to prevent water drops from falling directly into the water present at mist chamber.

In an embodiment, the silencer is arranged adjacent to a fan shroud.

In an embodiment, the silencer is arranged and configured to guide water drops from the top portion of the silencer to the lower portion of the silencer via a plurality of connection plates extending between an upper plate and a bottom plate of the silencer.

### Description of the Drawings

The invention will become more fully understood from the detailed description given herein below. The accompanying drawings are given by way of illustration only, and thus, they are not limitative of the present invention. In the accompanying drawings:
- Fig. 1: shows a cross-sectional view of a fire simulating device according to the invention;
- Fig. 2: shows a close-up cross-sectional view of a portion of a fire simulating device according to the invention;
- Fig. 3: shows a perspective top view of a portion of a fire simulating device according to the invention;
- Fig. 4A: shows a close-up view of the outlet portion and light sources of a fire simulating device according to the invention;
- Fig. 4B: shows a top view of a plurality of separation structures extending between parallel side portions;
- Fig. 4C: shows a side view of the separation structures shown in Fig. 4B;
- Fig. 4D: shows a perspective top view of the separation structures shown in Fig. 4B and Fig. 4C;Fig. 5 shows a top view of a tank of a fire simulating device according to the invention
- Fig. 6: shows a bottom view of the tank shown in Fig. 5;
- Fig. 7A: shows a fire simulating device according to the invention;
- Fig. 7B: shows a perspective bottom view of the fire simulating device shown in Fig. 7A;
- Fig. 8A: shows a fire simulating device according to the invention;
- Fig. 8B: shows another view of the fire simulating device shown in Fig. 8A;
- Fig. 9A: shows the upper section of a fire simulating device according to the invention;
- Fig. 10: shows the outlet portion of a fire simulating device according to the invention;
- Fig. 11: shows a cross-sectional view of the outlet portion of a fire simulating device according to the invention and
- Fig. 12A: shows a schematic, cross-sectional view of a portion of a fire simulating device according to the invention;
- Fig. 12B: shows the fire simulating device shown in Fig. 12A in a configuration, in which the mounting members are arranged in another position;
- Fig. 12C: shows a schematic, cross-sectional view of a portion of a fire simulating device according to the invention;
- Fig. 12D: shows the fire simulating device shown in Fig. 12C in a configuration, in which the mounting members are oriented in a different direction;
- Fig. 12E: shows a schematic, cross-sectional view of a mounting member that is slidably attached to an arched frame portion by means of fixation structures;
- Fig. 12F: shows a schematic, cross-sectional view of the mounting shown in Fig. 12E;
- Fig. 13: shows a perspective cross-sectional view of a portion of a fire simulating device according to the invention;
- Fig. 14A: shows a silencer and fan shroud of a fire simulating device according to the invention;
- Fig. 14B: shows another view of the silencer and fan shroud shown in Fig. 14A;
- Fig. 15A: shows a cross-sectional view of a fire simulating device according to the invention;
- Fig. 15B: shows another view of the silencer and fan shroud shown in Fig. 14A and Fig. 14B and
- Fig. 15C: shows a further view of the silencer and fan shroud shown in Fig. 15B.

### Detailed description of the invention

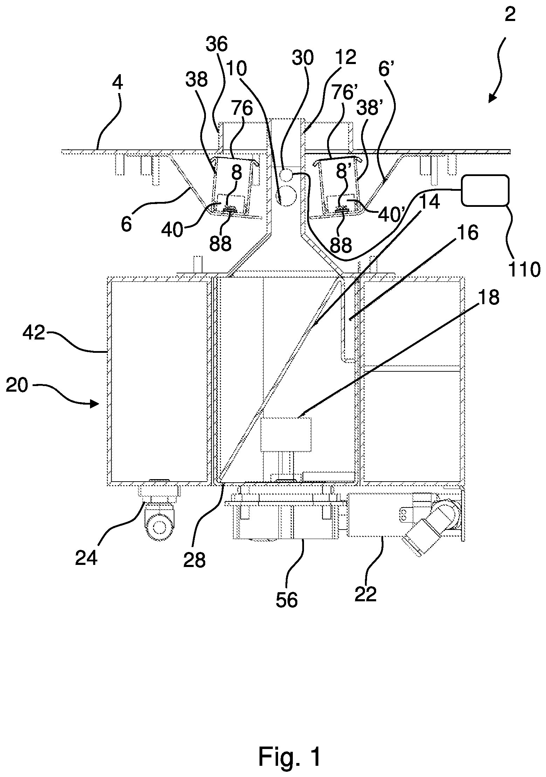

Referring now in detail to the drawings for the purpose of illustrating preferred embodiments of the present invention, a fire simulating device 2 of the present invention is illustrated in Fig. 1.

Fig. 1 illustrates a cross-sectional view of a fire simulating device 2 according to the invention. The fire simulating device 2 comprises a top plate 4 provided with an opening. The fire simulating device 2 comprises an outlet portion 12 that extends through the opening on the top plate 4.

The fire simulating device 2 comprises a tank 20 having a tank wall 42.

A mist chamber 28 is arranged adjacent to the tank 20. The fire simulating device 2 comprises an atomizer 56 that is arranged and configured to generate a mist (clouds of water vapour). The atomizer 56 comprises an ultrasonic transducer arranged to transmit ultrasound through the water in the mist chamber 28 and hereby provide mist.

The outlet portion 12 is in fluid communication with the mist chamber 28. Accordingly, the mist raising up from water in the mist chamber 28 will enter the outlet portion 12 and be guided upwards along the longitudinal axis of the outlet portion 12. When the mist leaves the outlet portion 12, the mist will continue upwards and be illuminated by light emitted by light sources 8, 8'. In a preferred embodiment, the light sources 8, 8' comprises a light-emitting diode (LED). It may be an advantage that each light source 8, 8' is a LED.

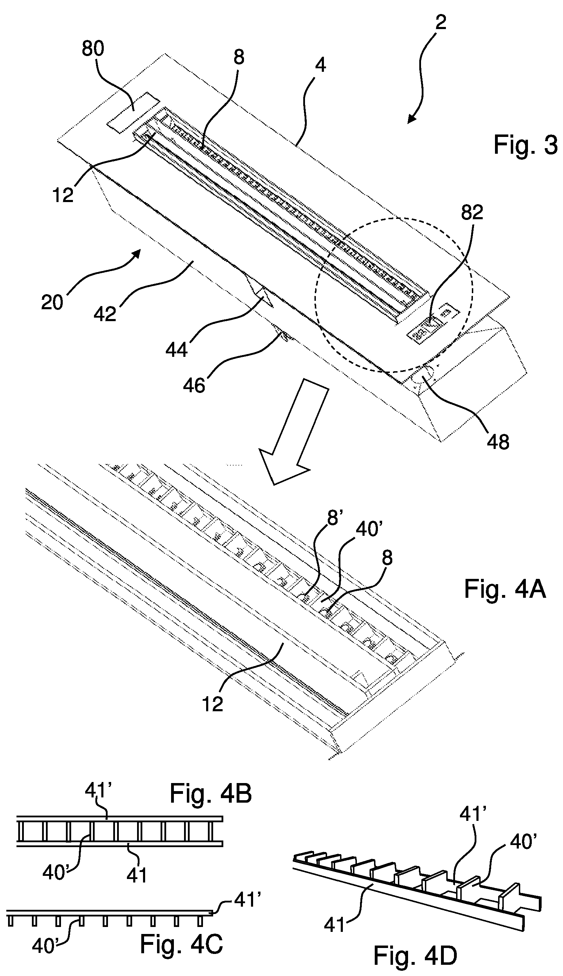

A plurality of separation structures 40, 40' extend upwards. Each separation structure 40, 40' separates two adjacent light sources 8, 8' (see Fig. 4 for a better view). Hereby, the separation structures 40, 40' function as a shield that prevents light emitted from light sources 8, 8' from illuminating reaching persons in proximity to the fire simulating device 2.

In a preferred embodiment, each light source 8, 8' is enclosed by separation structures 40, 40'.

The top plate 4 comprises two upright walls 36. The upright walls 36 are parallel to each other and to the distal portion of the outlet portion 12.

The fire simulating device 2 comprises two support structures 6, 6' arranged at each side of the outlet portion 12. The support structures 6, 6' are thermally connected to the top plate 4 and to the light sources 8, 8'. Accordingly, the support structures 6, 6' are capable of transferring heat from the light sources 8, 8' to the top plate 4. Since the top plate 4 is heated by the heat from the light sources 8, 8', condensation of mist on the top plate 4 can be avoided.

The fire simulating device 2 comprises a first group of light sources 8 arranged in a first mounting member 38 and a second group of light sources 8' arranged in a second mounting member 38'. The mounting members 38, 38' are shaped as elongated members having a basically U-shaped cross-section. The bottom portion of each of the mounting members 38, 38' is attached and hereby thermally connected to a corresponding support structure 6, 6'. Accordingly, heat generated by the light sources 8, 8' will be transferred to the corresponding support structure 6, 6' via the corresponding mounting member 38, 38'. A first filter 76 covers the opening of the first mounting member 38. A second filter 76' covers the opening of the second mounting member 38'. The filters 76, 76' are preferably may of a coloured foil. In one embodiment, the filters 76, 76' are preferably may of several layers of coloured foil.

The fire simulating device 2 comprises a heating element 10 extending along the longitudinal axis of the outlet portion 12. In a preferred embodiment, the heating element 10 is electrically powered.

A temperature sensor 30 is arranged above the heating element 10. The temperature sensor 30 is arranged and configured to measure the temperature of the mist passing the temperature sensor 30. Accordingly, the detected temperature can be used to regulate and density of the mist that is produced in the mist chamber.

The fire simulating device 2 comprises a control unit 110. The control unit 110 is electrically connected to the temperature sensor 30. Alternatively, the control unit 110 is wirelessly connected to the temperature sensor 30. Accordingly, the control unit receives the data collected by the temperature sensor.

The fire simulating device 2 comprises a water level sensor 18 arranged and configured to detect the water level of the mist chamber 28. The measurements made by the water level sensor 18 are used to keep the water level constant or at least within predefined range. In one embodiment, the water level is kept at a predefined level at approximately 15 mm. In one embodiment, the water level is kept at a predefined level at approximately 20 mm. In one embodiment, the water level is kept at a predefined level at approximately 10-35 mm. In one embodiment, the water level is kept at a predefined level at approximately 15-30 mm. In one embodiment, the water level is kept at a predefined level at approximately 20-25 mm. In one embodiment, the water level is kept at a predefined level at approximately 22 mm. In one embodiment, the switch 18 may be a float switch. By keeping the water level at a predefined level or within a predefined range, it is possible to control the mist generation rate. If the water level, however, is not kept at predefined level or within a predefined range, the mist generation rate cannot be controlled because the mist generation rate depends heavily on the water level.

If the water level in the mist chamber 28 decreases to a level below the predefined level or range, the valve 22 will open so that water will flow from the tank 20 via the inlet 24 into the mist chamber 28. In the mist chamber 28 mist will be generated by means of the atomizer 56. The atomizer 56 comprises an ultrasonic transducer arranged to transmit ultrasound through the water in the mist chamber 28 and hereby generate mist.

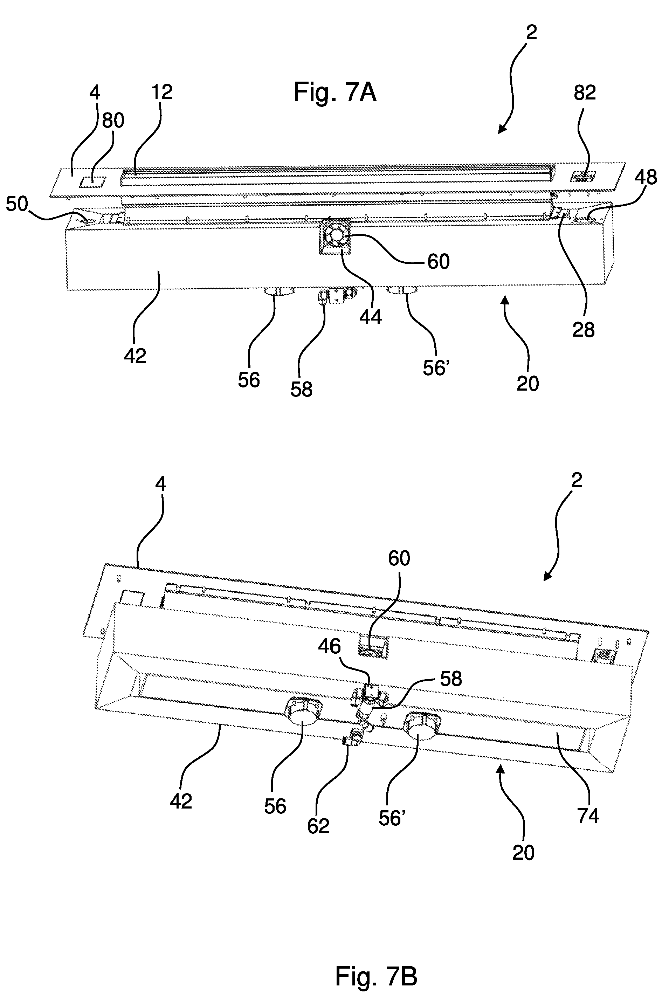

The fire simulating device 2 comprises a blower (see Fig. 7A and 7B) arranged and configured to blow air into the mist chamber 28. Hereby, the pressure inside the mist chamber can be controlled by regulating the activity of the blower. In a preferred embodiment, the control unit is connected to the blower, the valve 22 and to the water level sensor 18, wherein the control unit is configured to control the activity of the blower.

The size of the flames can be controlled by regulating the activity of the atomizer and the flow of air generated by the blower.

In one embodiment, a pressure senor is arranged and configured to detect the pressure inside the mist chamber 28. In one embodiment, the control unit is communicatively connected to the pressure sensor. Hereby, the control unit can regulate the activity of the blower in dependency of the pressure inside the mist chamber 28.

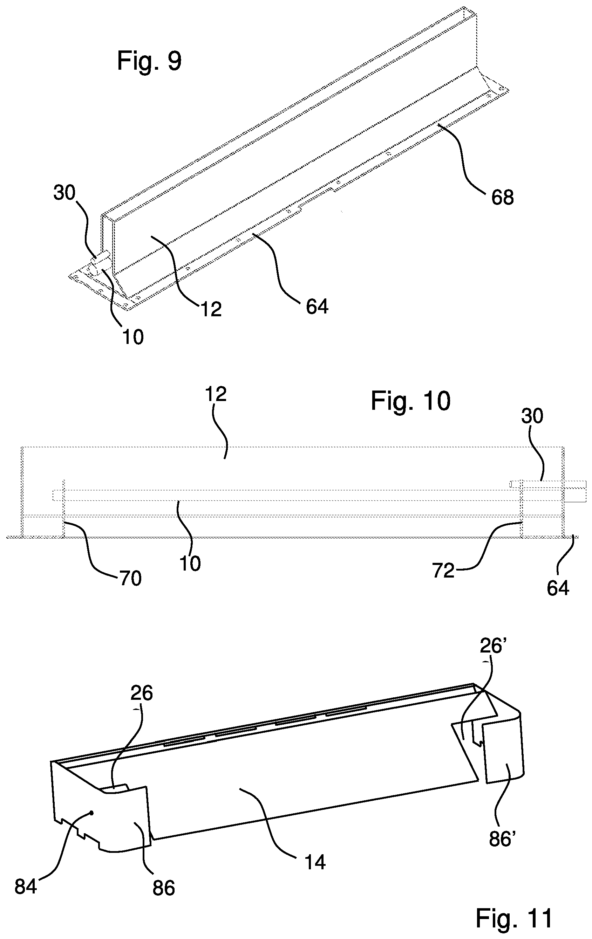

A divider structure 14 is arranged in the mist chamber 28. The divider structure 14 comprises an inclined plate that extends basically from the lower left corner to the upper right corner of the mist chamber 28. One or more openings are provided in the inclined plate (this can be seen in Fig. 11). The one or more openings allow the mist to be guided along the divider structure 14 in a manner, in which the mist can be mixed with air blown into the mist chamber 28 and be distributed homogenously along the length of the opening of the outlet portion 12. Accordingly, by means of the divider structure, the mist will be guided upwardly in the mist chamber 28 in such a manner that the mist will be evenly distributed along the length of the opening in the outlet portion 12. The mist will be heated by the heating element 10 when the mist passes the heating element 10.

In one embodiment, the heating element 10 extend along the entire length of the distal opening in the outlet portion 12. Hereby, the mist along the entire length of the distal opening in the outlet portion 12 will be heated.

The heating element 10 may, however, extend along less than the entire length of the distal opening in the outlet portion 12.

An air chamber 16 is provided in the mist chamber 28. The air chamber 16 receives air from the blower (not shown). The air chamber 16 is in fluid communication with that part of the mist chamber 28, in which the mist is generated. Accordingly, when mist leaves this part of the mist chamber 28, the air blown into the air chamber 16 will balance the pressure inside the mist chamber 28.

When the light emitted by the light sources 8, 8' illuminates the mist, the mist will resemble fire. Mist that is not illuminated by light will, however, resemble smoke.

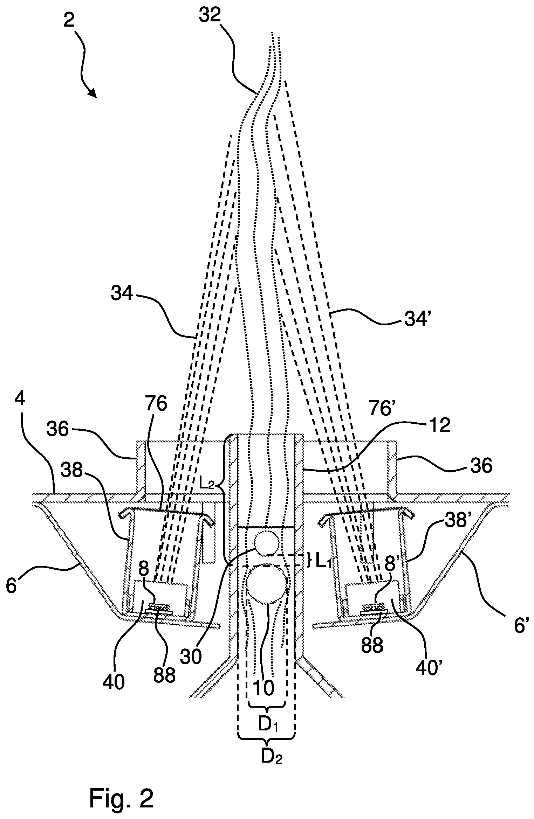

Fig. 2 illustrates a close-up cross-sectional view of a portion of a fire simulating device 2 according to the invention. The fire simulating device 2 corresponds to the one shown in Fig. 1. Light 34 from the light sources 8 illuminates mist 32 from the left side. On the other hand, light 34' from the light sources 8' illuminates mist 32 from the right side. When the mist 32 is illuminated by light 34, 34', the illuminated mist 32 resembles flames.

The light sources 8 are arranged on a band extending along the bottom part of the mounting member 38. A plurality of separation structures 40 are arranged next to the light sources 8 in order to shield (and hereby create a shadow zone) in order to avoid that light is emitted from the light sources 8 directly into the eyes of individuals close to the in fire simulating device 2. Likewise, the light sources 8' are arranged on a band extending along the bottom part of the mounting member 38'. A plurality of separation structures 40' are arranged next to the light sources 8 in order to shield (and hereby create a shadow zone).

It can be seen that the temperature sensor 30 is arranged in a relative short distance L₁ (e.g. 0.2-2 cm) from the top side of the heating element 10. The diameter d₁ of the heating element 10 is only slightly smaller than the inner width d₂ of the distal portion of the outlet portion 12. Accordingly, the mist 32 is located close to the heating element 10 when passing the heating element 10. Accordingly, at efficient heating of the mist can be achieved. The heating element 10 has a circular cross section. However, the heating element 10 may have a rectangular cross section or another cross section.

In one embodiment, the diameter D₁ of the heating element 10 is larger than the diameter of the temperature sensor 30. In one embodiment, the inner diameter or width D₂ of the distal portion of the outlet portion 12 is less than twice as large as the diameter D₁ of the heating element 10.

In one embodiment, the distance L₂ from the distal end of the outer portion 12 and the heating element 10 is less than 20 cm. In one embodiment, the distance L₂ from the distal end of the outer portion 12 and the heating element 10 is less than 15 cm. In one embodiment, the distance L₂ from the distal end of the outer portion 12 and the heating element 10 is less than 10 cm.

In one embodiment, the distance L₁ between the In one embodiment, the distance L₂ from the distal end of the outer portion 12 and the heating element 10 is less than 20 cm and the heating element 10 is less than 5 cm. In one embodiment, the distance L₁ between the In one embodiment, the distance L₂ from the distal end of the outer portion 12 and the heating element 10 is less than 20 cm and the heating element 10 is less than 3 cm. In one embodiment, the distance L₁ between the In one embodiment, the distance L₂ from the distal end of the outer portion 12 and the heating element 10 is less than 20 cm and the heating element 10 is less than 2 cm. By having a short distance between the temperature sensor 30 and the heating element 10, it is possible to assure that the temperature sensor 30 detects the temperature of mist immediately after the mist has been heated by the heating element 10.

Fig. 3 shows a perspective top view of a portion of a fire simulating device 2 according to the invention. The fire simulating device 2 corresponding to the one shown in Fig. 1 and Fig. 2. The fire simulating device 2 comprises a top plate 4 provided with an opening, through which the distal end of an outlet portion 12 extends. Accordingly, the mist generated by the fire simulating device 2 will be released from the outlet portion in a level above the top plate 4.

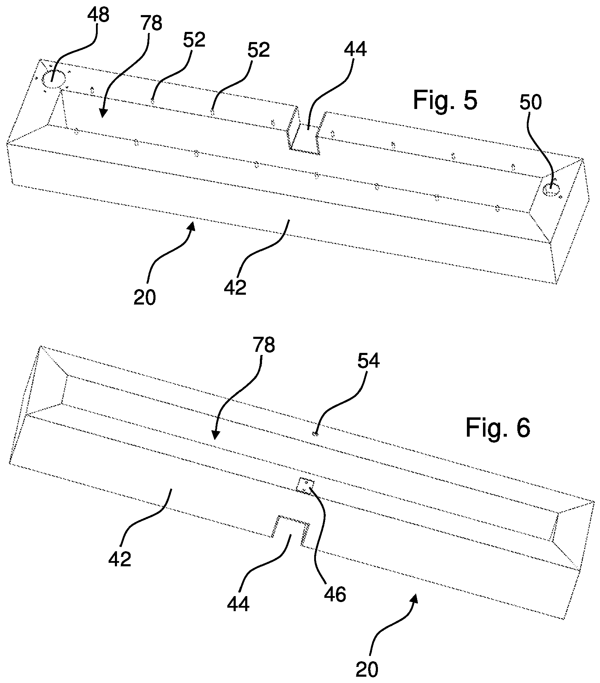

A water tank 20 having a wall 42 is arranged below the top plate 4. A recess 44 is provided in the tank wall 42. The recess 44 is designed to receive a blower (not shown) that can blow from the surroundings into the mist chamber (not shown). It can be seen that a bracket 46 is arranged below the tank 20. An opening 48 is provided in the tank 20. The opening 48 is arranged close to a corner portion of the tank 29. The opening 48 is designed to receive a water level sensor (not shown) configured to detect the water level of the water tank 20. A display 82 is provided at the top plate 4. The display may be connected to the water level sensor (not shown). A cover lid 80 is provided in the opposite end of the top plate 4. The lid 80 can is designed to close the opening 50 shown in Fig. 5.

A light source assembly is arranged adjacent to each side of the outlet portion 12. The light source assembly comprises a belt having a plurality of LEDs distributed along the length of the belt.

In one embodiment, the LEDs are evenly distributed along the length of the belt.

Fig. 4A illustrates a close-up view of the outlet portion 1 and a light source assembly of the fire simulating device 2 shown in Fig. 3. The light source assembly comprises a plurality of light sources 8, 8' formed as LEDs. Adjacent LEDs 8, 8' are separated by a separation structure 40' formed as a plate extending parallel to the longitudinal axis of the opening in the outlet portion 12. The separation structures 40' limits the illumination area of the LEDS 8, 8'. Accordingly, the separation structure 40' prevents user from being blinded by light emitted by the LEDs 8, 8'.

Fig. 4B illustrates a top view of a plurality of separations structures 40' extending between parallel side portions 41, 41'. Fig. 4C illustrates a side view of the separation structures 40' shown in Fig. 4B. Fig. 4D illustrates a perspective top view of the separation structures 41 shown in Fig. 4B and Fig. 4C.

The separation structures 41 are plate-shaped and are attached to two parallel side portions 41, 41' extending along opposing edges of the separation structures 41.

Fig. 5 illustrates a top view of a tank 20 of a fire simulating device according to the invention. The tank 20 is shaped as two long sides extending between two short sides, to which the long sides are attached to. The tank 20 surrounds a receiving portion 78 that is configured to receive the mist chamber (not shown).

A plurality of pins 52 protruding from the long sides of the tank 20. The pins 52 are distributed evenly along the length of the long sides of the tanks 20. The pins 52 may, however, be arranged in another configuration. The pins 52 can be used to mechanically connect the tank 20 to an outlet portion. This can be accomplished by bringing the pins 52 into engagement with corresponding attachment structures provided in the outlet portion (as shown in Fig. 10). It is important to underline, that other attachment means can be used. Accordingly, the pins and holes can be replaced by other means for attachment.

A recess 44 is provided in one of the long sides of the tank 20. The recess 44 is designed to allow a blower (not shown) to be mounted in the recess 44 so that the blower can blow air into the mist chamber (not shown).

An opening 48 is provide in the corner region of the tank 20. Moreover, another opening 50 (for filling water into the water tank 20) is provided in the opposing short side of the tank 20. The opening 48 is intended for receiving a water level sensor configured to detect the water level of the water tank 20. The opening 50 is designed as an inlet allowing water to be filled into the water tank 20.

Fig. 6 illustrates a bottom view of the tank 20 shown in Fig. 5. It can be seen that the recess 44 is provided centrally at one of the long sides of the tank. The recess 44 extends from the tank wall 42 into receiving portion 76.

A hole 54 is provided in the long side that does not comprise a recess 44. A bracket 46 is provided above the recess 44.

Fig. 7A illustrates a perspective side view of a portion of a fire simulating device 2 according to the invention. Fig. 7B illustrates a perspective bottom view of a portion of a fire simulating device 2 according to the invention. The fire simulating device 2 corresponds to the one shown in Fig. 1, Fig. 2, Fig. 3 and Fig. 4. A blower 60 is mounted in the recess 44.

A first atomizer 56 and a second atomizer 56' are mounted at the bottom portion 74 of the mist chamber 28 that is installed in the receiving portion of the tank 20. The atomizers 56, 56' protrude from the bottom portion 74 of the mist chamber 28. On the other hand, each atomizer 56, 56' comprises an ultrasonic transducer (not shown) arranged in a position, in which the ultrasonic transducer can transmit ultrasound into the water in the mist chamber 28.

A valve 58 is mounted on the tank 20 by means of the bracket 46 attached to the tank 20. In one embodiment, the valve 58 is an electrically activated valve 58. The valve 58 may be an electromechanically operated valve which is often referred to as a solenoid valve.

The valve 58 is arranged and configured to provide a flow of water from the tank 20 to the mist chamber 28. In a preferred embodiment, the fire simulating device 2 comprises a control unit (not shown) arranged and configured to control the activity of the valve 58. A tank outlet 62 is provided in the bottom plate of the tank 20. The tank outlet 62 can guide water out from the tank 20 to the mist chamber 28 via a hose or pipe (not shown) extending between the tank outlet 62 and the valve 58.

In one embodiment, the control unit is configured to control the activity of the valve 58 on the basis of measurement made by a water level sensor arranged in the mist chamber 28. Hereby, the control unit can control the valve 58 in such a manner that a constant water level (or a water level within a predefined range) can be maintained. A display 82 is provided in the right side og the top plate 3, whereas a lid 80 is provided in the opposite end of the top plate 4. The display may preferably be connected to a water level sensor (not shown) arranged in the water tank 20 and extending through the opening 48. The lid 80 is configured to cover the opening 50 in the water tank 20.

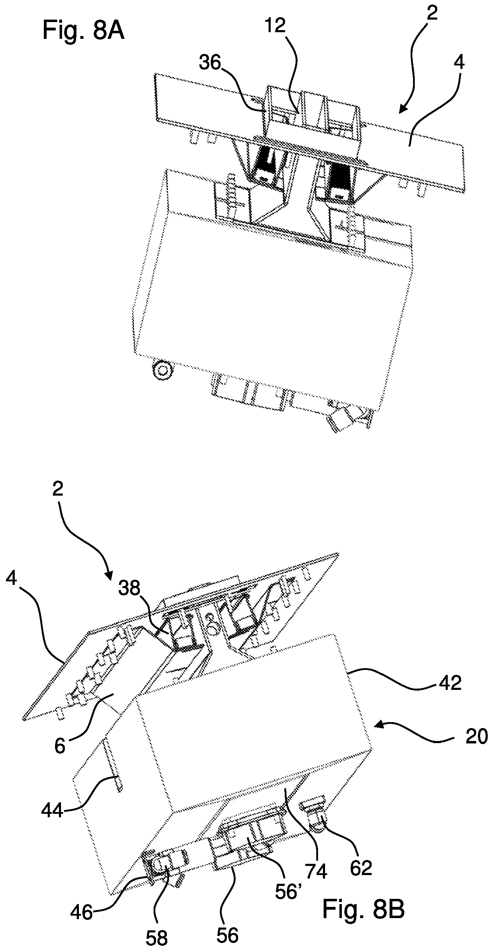

Fig. 8A illustrates a fire simulating device 2 according to the invention and Fig. 8B illustrates another view of the fire simulating device 2 shown in Fig. 8A. The fire simulating device 2 corresponds to the one shown in Fig. 1, Fig. 2, Fig. 3, Fig. 7A and Fig. 7B.

Fig. 9 illustrates the upper section of a fire simulating device 2 according to the invention. The upper section of the fire simulating device 2 comprises an output portion 12 that is attached to a mounting structure 64. The mounting structure 64 is provided with a plurality of holes 68 arranged and configured to receive the pins of the tank shown in and explained with reference to Fig. 5. Hereby, the output portion 12 can be attached to the tank.

It can be seen that the output portion 12 comprises a heating element 10 and a temperature sensor 30 arranged above the heating element 10. In one embodiment, the temperature sensor 30 is arranged to detect the temperature of the heating element 10.

In one embodiment, the temperature sensor 30 is arranged to detect the temperature of the mist having passed the heating element 10.

Fig. 10 illustrates a cross-sectional view of the outlet portion 12 of a fire simulating device according to the invention. The outlet portion 12 corresponds to the one shown in Fig. 9 and comprises a first support member 70 and a second support member 72 arranged to support the heating element 10. It can be seen that the temperature sensor 30 is attached to the second support member 72 which is thermally connected to the heating element 10. Accordingly, the temperature sensor 30 is arranged to measure the temperature of the heating element 10. This temperature will typically correspond to the temperature of the mist that has just passed the heating element 10.

Fig. 11 illustrates a divider structure 14 of a fire simulating device according to the invention. The divider structure 14 is configured to be arranged in the mist chamber of a fire simulating device according to the invention. The divider structure 14 comprises an inclined plate provided with two. These openings are arranged and configured to allow the mist to be guided along the divider structure 14 in a manner, in which the mist can be mixed with air blown into the mist chamber and be distributed homogenously along the length of the opening of the outlet portion.

The inclined plate extends between a first end portion 86 and a second end portion 86'. A hole 84 is provided in the first end portion 86.

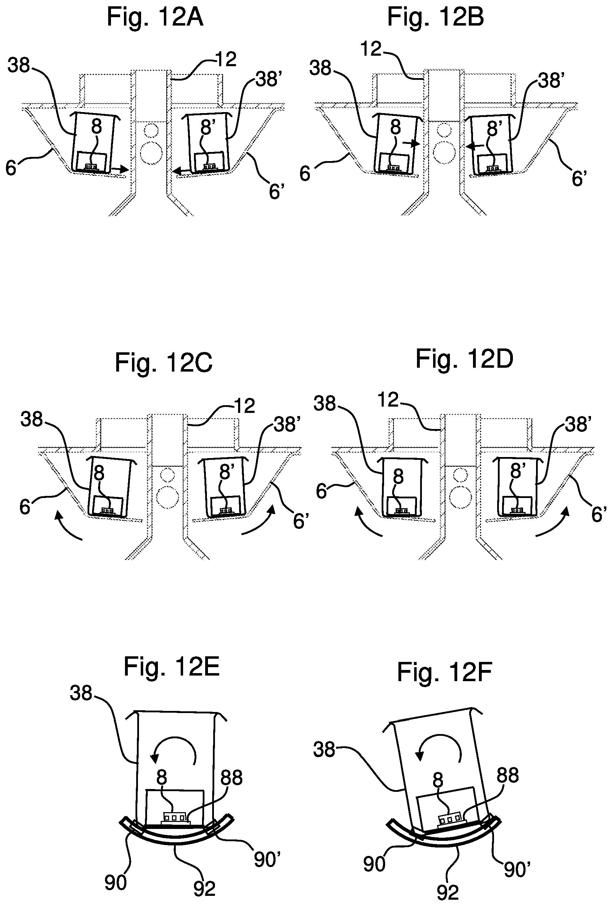

Fig. 12A illustrates a schematic, cross-sectional view of a portion of a fire simulating device according to the invention. Fig. 12B illustrates the fire simulating device shown in Fig. 12A in a configuration, in which the mounting members are arranged in another position.

The fire simulating device corresponds to the one shown in and explained with reference to Fig. 2. The fire simulating device comprises an outlet portion, a first mounting member 38 arranged on the left side of the outlet portion 12 and a second mounting member 38' arranged on the right side of the outlet portion.

The left mounting member 38 is arranged on a first support structure 6 and right mounting member 38' is arranged on a second support structure 6'. By bringing the mounting members 38, 38' from a locked configuration to an unlocked configuration (e.g. by means of one or more locking screws) it is possible to move the mounting members 38, 38' relative to the first support structure 6 and the second support structure 6', respectively. Hereby, the position of the mounting members 38, 38' and thus the light sources 8, 8' relative to the outer portion 12 and the support structures 6, 6' can be adjusted.

Fig. 12C illustrates a schematic, cross-sectional view of a portion of a fire simulating device according to the invention. Fig. 12D illustrates the fire simulating device shown in Fig. 12C in a configuration, in which the mounting members are oriented in a different direction.

The fire simulating device corresponds to the one shown in and explained with reference to Fig. 2. The fire simulating device comprises an outlet portion 12, a first mounting member 38 arranged on the left side of the outlet portion 12 and a second mounting member 38' arranged on the right side of the outlet portion.

The left mounting member 38 is arranged on a first support structure 6 and right mounting member 38' is arranged on a second support structure 6'. By bringing the mounting members 38, 38' from a locked configuration to an unlocked configuration (e.g. by means of one or more locking screws) it is possible to change the orientation of the mounting members 38, 38' relative to the first support structure 6 and the second support structure 6', respectively. Accordingly. The orientation of the mounting members 38, 38' and thus the light sources 8, 8' relative to the outer portion 12 and the support structures 6, 6' can be adjusted.

Fig. 12E and Fig. 12F illustrate a schematic, cross-sectional view of a mounting member 38 that is slidably attached to an arched frame portion 92 by means of fixation structures 90, 90'. The fixation structures 90, 90' may comprise screws that are arranged and configured to attach the fixation structures 90, 90' to arched frame portion 92.

In Fig. 12E, the mounting member 38 and the light source 8 arranged therein are arranged in an upwards direction. In Fig. 12F, however, the mounting member 38 has been moved to the right along the arched frame portion 92. Accordingly, the mounting member 38 and the source 8 has been angled approximately 20 degrees anticlockwise (when compared to Fig 12E). It can be seen that the light source 8 is mounted on the top of a band 88.

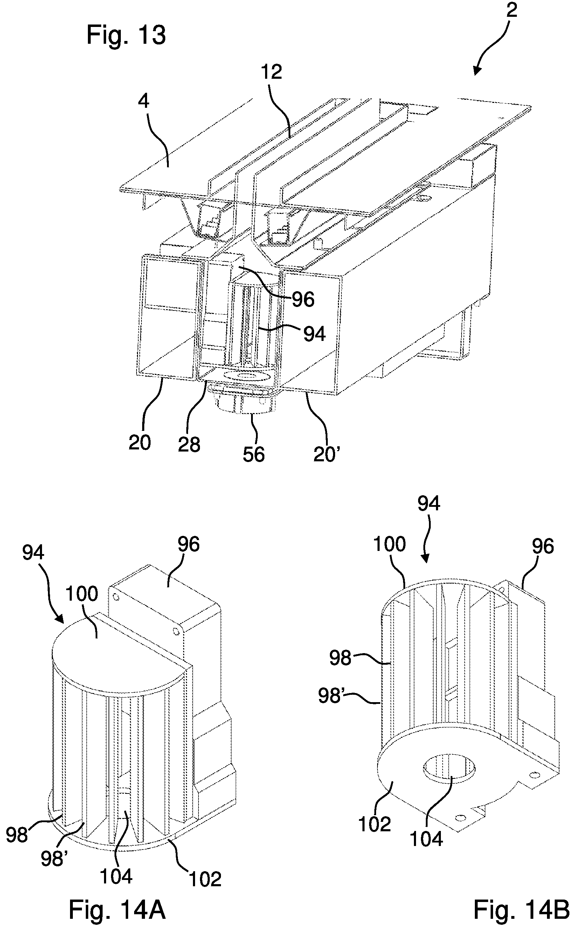

Fig. 13 illustrates a perspective cross-sectional view of a portion of a fire simulating device 2 according to the invention. The fire simulating device 2 comprises a top plate 4 provided with an opening. The fire simulating device 2 comprises an outlet portion 12 that extends through the opening on the top plate 4.

The fire simulating device 2 comprises a first tank 20 having a tank wall and a second tank 20' having a tank wall. The fire simulating device 2 comprises an atomizer 56 that is arranged and configured to generate a mist (clouds of water vapour). The atomizer 56 comprises an ultrasonic transducer arranged to transmit ultrasound through the water in the mist chamber 28 and hereby provide mist.

A silencer 94 is arranged in the mist chamber 28. The silencer 94 is arranged adjacent to a fan shroud 96. The silencer 94 is arranged and configured to prevent water drops from falling directly into the water present at mist chamber 28. The silencer 94 is arranged and configured to guide water drops from the top portion of the silencer 94 to the lower portion of the silencer 94 via a plurality of connection plates extending between an upper plate and a bottom plate of the silencer 94.

Fig. 14A illustrates a silencer 64 and fan shroud 96 of a fire simulating device according to the invention. Fig. 14B illustrates another view of the silencer 94 and fan 96 shroud shown in Fig. 14A. The silencer 94 and fan shroud 96 correspond to the ones shown in Fig. 13.

The silencer 94 comprises an upper plate 10, a bottom plate 12 and a plurality of connection plates 98, 98' extending between the upper plate 100 and the bottom plate 102. The connection plates 98, 98' extend vertically. A hole 104 is provide in the bottom plate 102. Accordingly, water that is guided downwards via the connection plates 98, 98' can leave the bottom plate via the hole 104 or via the edge of the bottom plate 102. The fan shroud 96 is attached to the silencer 94. The e fan shroud 96 is configured to guide air from a blower through the silencer 94.

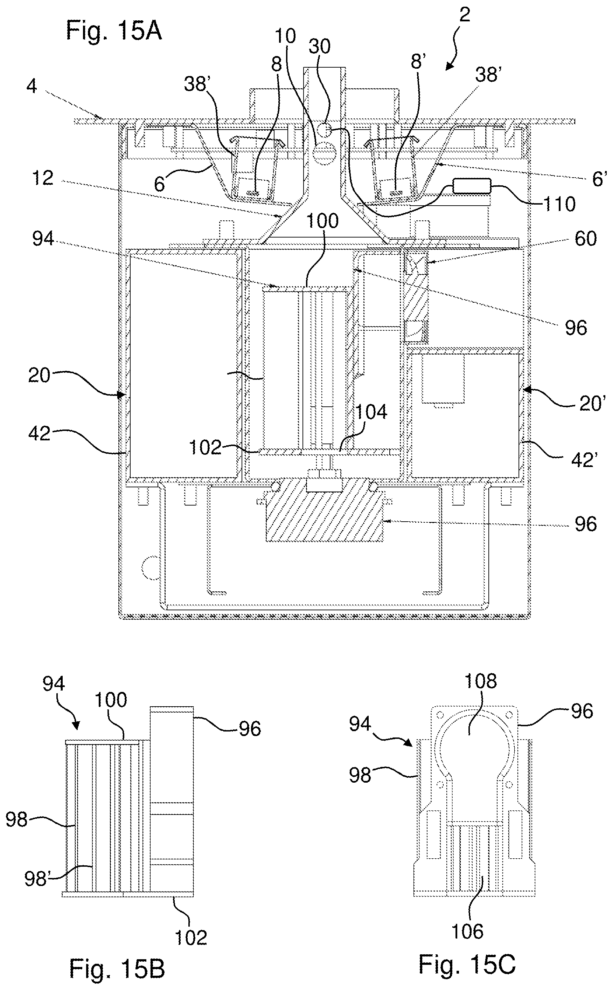

Fig. 15A illustrates a cross-sectional view of a fire simulating device according to the invention. The fire simulating device 2 comprises a top plate 4 provided with an opening. The fire simulating device 2 comprises an outlet portion 12 that extends through the opening on the top plate 4.

The fire simulating device 2 comprises a first tank 20 having a tank wall 42 and a second tank 20' having a tank wall 42'. The fire simulating device 2 comprises an atomizer 56 that is arranged and configured to generate a mist (clouds of water vapour). The atomizer 56 comprises an ultrasonic transducer arranged to transmit ultrasound through the water in the mist chamber 28 and hereby provide mist.

The outlet portion 12 is in fluid communication with the mist chamber 28. Accordingly, the mist raising up from water in the mist chamber 28 will enter the outlet portion 12 and be guided upwards along the longitudinal axis of the outlet portion 12. When the mist leaves the outlet portion 12, the mist will continue upwards and be illuminated by light emitted by light sources 8, 8'.

The fire simulating device 2 comprises two support structures 6, 6' arranged at each side of the outlet portion 12. The support structures 6, 6' are thermally connected to the top plate 4 and to the light sources 8, 8'. Accordingly, the support structures 6, 6' are capable of transferring heat from the light sources 8, 8' to the top plate 4. Since the top plate 4 is heated by the heat from the light sources 8, 8', condensation of mist on the top plate 4 can be avoided.

The fire simulating device 2 comprises a first group of light sources 8 are arranged in a first mounting member 38 and a second group of light sources 8' are arranged in a second mounting member 38'. The mounting members 38, 38' are shaped as elongated members having a basically U-shaped cross-section. The bottom portion of each of the mounting members 38, 38' is attached and hereby thermally connected to a corresponding support structure 6, 6'. Accordingly, heat generated by the light sources 8, 8' will be transferred to the corresponding support structure 6, 6' via the corresponding mounting member 38, 38'.

The fire simulating device 2 comprises a heating element 10 extending along the longitudinal axis of the outlet portion 12. In a preferred embodiment, the heating element 10 is electrically powered.

A temperature sensor 30 is arranged above the heating element 10. The temperature sensor 30 is arranged and configured to measure the temperature of the mist passing the temperature sensor 30. Accordingly, the detected temperature can be used to regulate and density of the mist that is produced in the mist chamber.

The fire simulating device 2 comprises a control unit 110. The control unit is electrically and or communicatively connected to the temperature sensor 30. Accordingly, the control unit 110 receives the data collected by the temperature sensor 30.

The fire simulating device 2 comprises a blower 60 arranged and configured to blow air into the mist chamber 28. Hereby, the pressure inside the mist chamber 28 can be controlled by regulating the activity of the blower 60. The blower 60 is configured to be arranged in the cavity 108 (see Fig. 15C) in the fan shroud (see Fig. 15C).

The size of the flames can be controlled by regulating the activity of the atomizer and the flow of air generated by the blower.

The heating element 10 may, however, extend along less than the entire length of the distal opening in the outlet portion 12.

When the light emitted by the light sources 8, 8' illuminates the mist, the mist will resemble fire. Mist that is not illuminated by light will, however, resemble smoke.

Fig. 15B illustrates another view of the silencer 94 and fan shroud 96 shown in Fig. 14A and Fig. 14B.

Fig. 15C illustrates a further view of the silencer 94 and fan shroud 98 shown in Fig. 15B. It can be seen that the fan shroud 98 comprises a cavity 198 configured to receive the blower (shown in Fig. 15A). Moreover, the fan shroud 98 comprises an opening 106 through which air from the below can be guided.

### List of reference numerals

- 2: Fire simulating device
- 4: Top plate
- 6, 6': Support structure
- 8, 8': Light source
- 10: Heating element
- 12: Outlet portion
- 14: Divider structure
- 16: Air chamber
- 18: Water level sensor
- 20, 20': Tank
- 22: Valve
- 24: Inlet
- 26, 26: Opening
- 28: Mist chamber
- 30: Temperature sensor
- 32: Mist
- 34, 34': Light
- 36: Upright wall
- 38, 38': Mounting member
- 40, 40': Separation structure
- 41, 41': Side portion
- 42, 42': Tank wall
- 44: Recess
- 46: Bracket
- 48: Opening
- 50: Opening
- 52: Pin
- 54: Hole
- 56, 56': Atomizer
- 58: Valve
- 60: Blower (fan)
- 62: Tank outlet
- 64: Mounting structure
- 68: Hole
- 70, 72: Support member
- 74: Bottom portion
- 76, 76': Filter (e.g. made of foil)
- 78: Receiving portion
- 80: Lid
- 82: Display
- 84: Hole
- 86, 86': End portion
- 88: Band
- 90, 90': Fixation structure
- 92: Arched frame portion
- 94: Silencer
- 96: Fan shroud
- 98, 98': Connection plate
- 100: Upper plate
- 102: Bottom plate
- 104: Hole
- 106: Opening
- 108: Cavity
- 110: Control unit
- L₁, L₂: Distance
- D₁, D₂: Diameter or width

## Claims

1. A fire simulating device (2) for providing an optical effect that simulates flames by illuminating mist (32) generated from water, wherein the device (2) comprises:
- a mist chamber (28) configured to contain water;
- one or more atomizers (56, 56') arranged to transmit ultrasound through the water in the mist chamber (28) and hereby generate mist (32);
- one or more light sources (8, 8') arranged to direct their light against the mist (32) and hereby simulate flames;
- an outlet portion (12) extending through the top plate (4), a top plate (4) containing an opening through which the outlet portion (12) extends,
wherein the outlet portion (12) is configured to guide away mist (32) from the mist chamber (28), wherein the outlet portion (12) comprises an elongated opening in its distal end;
- a blower (60) arranged and configured to provide an air flow into the mist chamber (28);
- a heating element (10) arranged to heat the mist (32),
wherein the fire simulating device (2) comprises a water tank (20), wherein the tank (20) is in fluid communication with the mist chamber (28),
wherein the mist chamber (28) comprises a water level sensor (18) arranged and configured to detect the water level of the mist chamber (28),
wherein the fire simulating device (2) comprises a temperature sensor (30) arranged and configured to communicate with a control unit (110) and to measure the temperature of the heating element (10) or the mist (32),
wherein the fire simulating device (2) is configured to control transport of water from the water tank to the mist chamber by using a controllable valve (58) or a pump,
**characterised in** the fire simulating device further comprises:
- a first light assembly comprising a plurality of light sources (8, 8') arranged at one side of the distal end of the outlet portion (12) and
- a second light assembly comprising a plurality of light sources (8, 8') arranged at the other side of the distal end of the outlet portion (12),
wherein each light assembly comprises a plurality of separation structures (40, 40') extending upwards, wherein each separation structure (40, 40') separates two adjacent light sources (8, 8').

2. A fire simulating device (2) according to claim 1, **characterised in that** the light sources (8, 8') are covered by a filter (76, 76').

3. A fire simulating device (2) according to one of the preceding claims, **characterised in that**:
- a first group of light sources (8) are mounted in a first mounting member (38) arranged at one side of the outlet portion (12) and
- a second group of light sources (8') are mounted in a second mounting member (38') arranged at the other side of the outlet portion (12).

4. A fire simulating device (2) according to claim 3, **characterised in that** the first mounting member (38) and/or the second mounting member (38') are mounted on a support structure (6, 6') that is thermically connected to the top plate (4).

5. A fire simulating device (2) according to claim 4, **characterised in that** at least one of the mounting members (38, 38') comprises an adjustment structure by which it is possible to adjust the orientation of the mounting member (38, 38').

6. A fire simulating device (2) according to claim 5, **characterised in that** the control unit (110) is communicatively connected to the valve (58) and to the water level sensor (18), wherein the control unit (110) is configured to control the activity of the valve (58) on the basis of data from the water level sensor (18).

7. A fire simulating device (2) according to one of the preceding claims, **characterised in that** the mist chamber (28) comprises an air chamber (16) arranged and configured to receive intake air blown into the mist chamber (28) by means of the blower (60), wherein the air chamber (16) is arranged and shaped to guide the intake air downwards towards the water in the mist chamber (28).

8. A fire simulating device (2) according to one of the preceding claims, **characterised in that** the tank comprises a receiving portion (78) surrounded by the tank (20) and the mist chamber (28) is designed to be received by the receiving portion (78).

9. A fire simulating device (2) according to one of the preceding claims, **characterised in that** the heating element (10) is arranged in the outlet portion (12).

10. A fire simulating device (2) according to one of the preceding claims, **characterised in that** the temperature sensor (30) is arranged in a distance less than 10 cm from the distal end of the outlet portion (12) above the heating element (10).

11. A fire simulating device (2) according to one of the preceding claims, **characterised in that** transport of water from the water tank to the mist chamber (28) is controlled by using an electrical pump.

## Patentansprüche

1. Feuersimulationsvorrichtung (2) zum Bereitstellen eines optischen Effekts, der Flammen simuliert, indem sie aus Wasser erzeugten Nebel (32) beleuchtet, wobei die Vorrichtung (2) Folgendes umfasst:
- eine Nebelkammer (28), die dazu konfiguriert ist, Wasser aufzunehmen;
- ein oder mehrere Zerstäuber (56, 56'), die so angeordnet sind, dass sie Ultraschall durch das Wasser in der Nebelkammer (28) übertragen und dadurch Nebel (32) erzeugen;
- eine oder mehrere Lichtquellen (8, 8'), die so angeordnet sind, dass sie ihr Licht gegen den Nebel (32) richten und dadurch Flammen simulieren;
- einen Auslassabschnitt (12), der sich durch die obere Platte (4) erstreckt, wobei die obere Platte (4) eine Öffnung enthält, durch die sich ein Auslassabschnitt (12) erstreckt, wobei der Auslassabschnitt (12) so konfiguriert ist, dass er Nebel (32) von der Nebelkammer (28) wegführt, wobei der Auslassabschnitt (12) an seinem distalen Ende eine längliche Öffnung aufweist;
- ein Gebläse (60), das so angeordnet und konfiguriert ist, dass es einen Luftstrom in die Nebelkammer (28) erzeugt;
- ein Heizelement (10), das zum Erhitzen des Nebels (32) angeordnet ist,
wobei die Feuersimulationsvorrichtung (2) einen Wassertank (20) umfasst, wobei der Tank (20) in strömungstechnischer Kommunikation mit der Nebelkammer (28) steht,
wobei die Nebelkammer (28) einen Wasserstandsensor (18) umfasst, der so angeordnet und konfiguriert ist, dass er den Wasserstand der Nebelkammer (28) erfasst,
wobei die Feuersimulationsvorrichtung (2) einen Temperatursensor (30) umfasst, der so angeordnet und konfiguriert ist, dass er mit einer Steuereinheit (110) kommuniziert und die Temperatur des Heizelements (10) oder des Nebels (32) misst,
wobei die Feuersimulationsvorrichtung (2) so konfiguriert ist, dass sie den Wassertransport vom Wassertank zur Nebelkammer mittels eines steuerbaren Ventils (58) oder einer Pumpe steuert,
**dadurch gekennzeichnet, dass** die Feuersimulationsvorrichtung ferner Folgendes umfasst:
- eine erste Leuchtenanordnung, die mehrere Lichtquellen (8, 8') umfasst, die an einer Seite des distalen Endes des Auslassabschnitts (12) angeordnet sind, und
- eine zweite Leuchtenanordnung, die mehrere Lichtquellen (8, 8') umfasst, die auf der anderen Seite des distalen Endes des Auslassabschnitts (12) angeordnet sind, wobei jede Leuchtenanordnung mehrere nach oben ragende Trennstrukturen (40, 40') umfasst, wobei jede Trennstruktur (40, 40') jeweils zwei benachbarte Lichtquellen (8, 8') trennt.

2. Feuersimulationsvorrichtung (2) nach Anspruch 1,
**dadurch gekennzeichnet, dass** die Lichtquellen (8, 8') von einem Filter (76, 76') abgedeckt werden.

3. Feuersimulationsvorrichtung (2) nach einem der vorstehenden Ansprüche, **dadurch gekennzeichnet, dass**:
- eine erste Gruppe von Lichtquellen (8) in einem ersten Montageelement (38) angebracht ist, das an einer Seite des Auslassabschnitts (12) angeordnet ist, und
- eine zweite Gruppe von Lichtquellen (8') in einem zweiten Montageelement (38') angebracht ist, das auf der anderen Seite des Auslassabschnitts (12) angeordnet ist.

4. Feuersimulationsvorrichtung (2) nach Anspruch 3,
**dadurch gekennzeichnet, dass** das erste Montageelement (38) und/oder das zweite Montageelement (38') auf einer Trägerkonstruktion (6, 6') angebracht ist/sind, die thermisch mit der oberen Platte (4) verbunden ist.

5. Feuersimulationsvorrichtung (2) nach Anspruch 4,
**dadurch gekennzeichnet, dass** mindestens eines der Montageelemente (38, 38') eine Anpassungsstruktur umfasst, mit der die Ausrichtung des Montageelements (38, 38') angepasst werden kann.

6. Feuersimulationsvorrichtung (2) nach Anspruch 5,
**dadurch gekennzeichnet, dass** die Steuereinheit (110) kommunikativ mit dem Ventil (58) und dem Wasserstandsensor (18) verbunden ist, wobei die Steuereinheit (110) so konfiguriert ist, dass sie die Aktivität des Ventils (58) auf der Basis von Daten des Wasserstandsensors (18) steuert.

7. Feuersimulationsvorrichtung (2) nach einem der vorstehenden Ansprüche, **dadurch gekennzeichnet, dass** die Nebelkammer (28) eine Luftkammer (16) umfasst, die so angeordnet und konfiguriert ist, dass sie mittels des Gebläses (60) in die Nebelkammer (28) eingeblasene Ansaugluft aufnimmt, wobei die Luftkammer (16) so angeordnet und geformt ist, dass sie die Ansaugluft nach unten zum Wasser in der Nebelkammer (28) leitet.

8. Feuersimulationsvorrichtung (2) nach einem der vorstehenden Ansprüche, **dadurch gekennzeichnet, dass** der Tank einen vom Tank (20) umschlossenen Aufnahmeabschnitt (78) umfasst und die Nebelkammer (28) so gestaltet ist, dass sie vom Aufnahmeabschnitt (78) aufgenommen wird.

9. Feuersimulationsvorrichtung (2) nach einem der vorstehenden Ansprüche, **dadurch gekennzeichnet, dass** das Heizelement (10) im Auslassabschnitt (12) angeordnet ist.

10. Feuersimulationsvorrichtung (2) nach einem der vorstehenden Ansprüche, **dadurch gekennzeichnet, dass** der Temperatursensor (30) in einem Abstand von weniger als 10 cm vom distalen Ende des Auslassabschnitts (12) über dem Heizelement (10) angeordnet ist.

11. Feuersimulationsvorrichtung (2) nach einem der vorstehenden Ansprüche, **dadurch gekennzeichnet, dass** der Transport von Wasser aus dem Wassertank zur Nebelkammer (28) mittels einer elektrischen Pumpe gesteuert wird.

## Revendications

1. Dispositif de simulation d'incendie (2) destiné à fournir un effet optique qui simule des flammes par l'illumination d'une brume (32) généré à partir d'eau, dans lequel le dispositif (2) comprend :
- une chambre de brumisation (28) configurée pour contenir de l'eau ;
- un ou plusieurs atomiseurs (56, 56') disposés pour transmettre des ultrasons à travers l'eau dans la chambre de brumisation (28) et ainsi générer de la brume (32) ;
- une ou plusieurs sources lumineuses (8, 8') disposées pour diriger leur lumière contre la brume (32) et ainsi simuler des flammes ;
- une partie de sortie (12) s'étendant à travers la plaque supérieure (4), une plaque supérieure (4) contenant une ouverture à travers laquelle une partie de sortie (12) s'étend, dans lequel la partie de sortie (12) est configurée pour guider la brume (32) hors de la chambre de brumisation (28), dans lequel la partie de sortie (12) comprend une ouverture allongée dans son extrémité distale ;
- un souffleur (60) disposé et configuré pour fournir un flux d'air dans la chambre de brumisation (28) ;
- un élément chauffant (10) disposé pour chauffer la brume (32),
dans lequel le dispositif de simulation d'incendie (2) comprend un réservoir d'eau (20), dans lequel le réservoir (20) est en communication fluidique avec la chambre de brumisation (28),
dans lequel la chambre de brumisation (28) comprend un capteur de niveau d'eau (18) disposé et configuré pour détecter le niveau d'eau de la chambre de brumisation (28),
dans lequel le dispositif de simulation d'incendie (2) comprend un capteur de température (30) disposé et configuré pour communiquer avec une unité de commande (110) et pour mesurer la température de l'élément chauffant (10) ou de la brume (32),
dans lequel le dispositif de simulation d'incendie (2) est configuré pour contrôler le transport de l'eau du réservoir d'eau vers la chambre de brumisation à l'aide d'une vanne contrôlable (58) ou d'une pompe,
**caractérisé en ce que** le dispositif de simulation d'incendie comprend en outre :
- un premier ensemble d'éclairage comprenant une pluralité de sources lumineuses (8, 8') disposées au niveau d'un côté de l'extrémité distale de la partie de sortie (12) et
- un second ensemble d'éclairage comprenant une pluralité de sources lumineuses (8, 8') disposées au niveau de l'autre côté de l'extrémité distale de la partie de sortie (12), dans lequel chaque ensemble d'éclairage comprend une pluralité de structures de séparation (40, 40') s'étendant vers le haut, dans lequel chaque structure de séparation (40, 40') sépare deux sources lumineuses adjacentes (8, 8').

2. Dispositif de simulation d'incendie (2) selon la revendication 1,
**caractérisé en ce que** les sources lumineuses (8, 8') sont recouvertes par un filtre (76, 76').

3. Dispositif de simulation d'incendie (2) selon l'une des revendications précédentes, **caractérisé en ce que** :
- un premier groupe de sources lumineuses (8) est monté dans un premier élément de montage (38) disposé au niveau d'un côté de la partie de sortie (12) et
- un second groupe de sources lumineuses (8') est monté dans un second élément de montage (38') disposé au niveau de l'autre côté de la partie de sortie (12).

4. Dispositif de simulation d'incendie (2) selon la revendication 3,
**caractérisé en ce que** le premier élément de montage (38) et/ou le second élément de montage (38') sont montés sur une structure de support (6, 6') qui est thermiquement connectée à la plaque supérieure (4).

5. Dispositif de simulation d'incendie (2) selon la revendication 4,
**caractérisé en ce qu'**au moins un des éléments de montage (38, 38') comprend une structure d'ajustement par laquelle il est possible d'ajuster l'orientation de l'élément de montage (38, 38').

6. Dispositif de simulation d'incendie (2) selon la revendication 5,
**caractérisé en ce que** l'unité de commande (110) est connectée de manière communicative à la vanne (58) et au capteur de niveau d'eau (18), dans lequel l'unité de commande (110) est configurée pour commander l'activité de la vanne (58) sur la base de données du capteur de niveau d'eau (18).

7. Dispositif de simulation d'incendie (2) selon l'une des revendications précédentes, **caractérisé en ce que** la chambre de brumisation (28) comprend une chambre à air (16) disposée et configurée pour recevoir l'air d'admission soufflé dans la chambre de brumisation (28) au moyen du souffleur (60), dans lequel la chambre à air (16) est disposée et façonnée pour guider l'air d'admission vers le bas en direction de l'eau dans la chambre de brumisation (28).

8. Dispositif de simulation d'incendie (2) selon l'une des revendications précédentes, **caractérisé en ce que** le réservoir comprend une partie réceptrice (78) entourée par le réservoir (20) et la chambre de brumisation (28) est conçue pour être reçue par la partie réceptrice (78).

9. Dispositif de simulation d'incendie (2) selon l'une des revendications précédentes, **caractérisé en ce que** l'élément chauffant (10) est disposé dans la partie de sortie (12).

10. Dispositif de simulation d'incendie (2) selon l'une des revendications précédentes, **caractérisé en ce que** le capteur de température (30) est disposé à une distance inférieure à 10 cm de l'extrémité distale de la partie de sortie (12) au-dessus de l'élément chauffant (10).

11. Dispositif de simulation d'incendie (2) selon l'une des revendications précédentes, **caractérisé en ce que** le transport de l'eau du réservoir d'eau à la chambre de brumisation (28) est commandé à l'aide d'une pompe électrique.
